# EUROPÄISCHE PATENTSCHRIFT

(11) **EP 2 784 333 B1**
(45) Veröffentlichungstag und Bekanntmachung des Hinweises auf die Patenterteilung: **21.03.2018**
(21) Anmeldenummer: 13161658.3
(22) Anmeldetag: 28.03.2013
(51) Int. Cl.: F16B 5/02, F16B 39/01, F16B 43/02

(54) **Vorrichtung zum Positionieren und Verspannen von zwei konzentrischen, einander teilweise überlappenden Bauteilen**
Device for the positioning and clamping of two concentric elements that partially overlap each other
Dispositif de positionnement et de serrage de deux composants concentriques, se chevauchant partiellement

(43) Veröffentlichungstag der Anmeldung: 01.10.2014
(73) Patentinhaber: MTU Aero Engines GmbH, 80995 München (DE)
(72) Erfinder: Hägert, Jan, 82205 Gilching (DE); van Barnefeld, Anita, 80636 München (DE)

(56) Entgegenhaltungen:
- EP-A1- 0 541 147
- DE-A1- 1 775 444
- GB-A- 2 280 484

## Beschreibung

Die Erfindung betrifft eine Vorrichtung zum Positionieren und Verspannen von zwei konzentrischen, einander teilweise überlappenden Bauteilen.

Bei zusammengesetzten Baugruppen aus zwei konzentrischen, einander teilweise überlappenden Bauteilen kommt es oft, insbesondere im Triebwerksbau, auf eine genaue Positionierung der beiden Bauteile zueinander an. In einem Triebwerk kann dabei eine Verbindung zwischen einem Zwischengehäuse und einem Hochdruck- oder Niederdruckgehäuse betroffen sein. Bisher wurden hier Dreibeinklammern mit jeweils einer Kugelscheibe, einem Stehbolzen und einer Mutter verwendet, die die beiden Gehäuseteile an einander befestigten. Diese Art der Befestigung konnte sich jedoch im Betrieb lockern und weiteren Verschleiß der Gehäuseteile verursachen.

Aus der DE 102 04 380 Cl ist eine Positionierungseinrichtung bekannt, die zwei Bauteile mit jeweils drei im Winkelabstand von 120° in Bezug auf den Mittelpunkt der Bauteile angeordnete Bohrungen mit einander verbindet. In jeder der drei Bohrungen ist eine Schraube angeordnet, die durch eine Bohrung in einem Prisma und eine Bohrung in einer Kugel hindurchführt. Das Prisma und die Bohrung bewirken zusammen eine reproduzierbare Positionierung. Das Prisma und die Schraube werden durch eine Mutter gespannt, die auf ein Ende des Prismas aufgeschraubt wird. Nachteilig ist hier der komplizierte Aufbau mit einer Vielzahl von Bauteilen einschließlich der genannten Bauteile sowie Unterlegscheiben, Feder und Isolator.

Aus der GB2280484A ist eine gattungsgemäße Vorrichtung zum Positionieren und Verspannen von zwei einander teilweise überlappenden Bauteilen mittels einer dreibeinigen, elastisch ausgebildeten Platte bekannt. Die Platte dient dabei als Federelement und ist mittels eines Bolzens an einem der Bauteile befestigt. Der Bolzen ist durch das betreffende Bauteil hindurchgeführt und ist mit einem Kopf in einem Senkloch in einer der Platte gegenüberliegenden Seite des Bauteils aufgenommen.

Der Erfindung liegt daher die Aufgabe zu Grunde eine Vorrichtung zu schaffen, mit der zwei konzentrische Bauteile sicher und einfach zu einander positioniert und mit einander verspannt werden können.

Diese Aufgabe wird erfingdungsgemäß mit einer Vorrichtung zum Positionieren und Verspannen von zwei konzentrischen, einander teilweise überlappenden Bauteilen nach Anspruch 1 und durch eine Verwendung der Vorrichtung nach Anspruch 5 gelöst. Vorteilhafte Ausgestaltungen der Erfindung sind in den Unteransprüchen enthalten.

Erfingdungsgemäß besteht die Lösung der Aufgabe in einer Vorrichtung zum Positionieren und Verspannen von zwei konzentrischen, einander teilweise überlappenden Bauteilen, wobei die Vorrichtung mehrere über den Umfang verteilte Spannmittel umfasst, die jeweils eine Dreibeinklammer, die einen Spalt zwischen den Bauteilen überspannt, ein Kugelelement und einen Bolzen, der die Dreibeinklammer einschließlich des Kugelelements an einem ersten Bauteil befestigt, aufweisen. Das Kugelelement ist ein Kugelabschnitt, der mit der Kugelkappe in einer komplementär zur Kugelkappe geformten Vertiefung in der vom ersten Bauteil abgewandten Seite der Dreibeinklammer angeordnet ist, der Bolzen ist durch jeweils eine Bohrung im Kugelabschnitt und im Dreibeinelement hindurchgeführt und mit dem ersten Bauteil verschraubt, und ein Federelement ist zwischen einem Bestandteil des Bolzens und der flachen Seite des Kugelelements angeordnet.

Mittels der platzsparenden Kugelkappe und der Vertiefung in der Dreibeinklammer können die beiden Bauteile zueinander ausgerichtet werden. Der Bolzen bildet dabei ein einfaches Mittel zur Befestigung der Dreibeinklammer. Das Federelement spannt die Dreibeinklammer gegen die Bauteile, ermöglicht einen Ausgleich eines verschleißbedingten Vorspannungsverlustes im Bolzen und bewirkt dadurch eine Verminderung des Verschleißes in der Vorrichtung wenn die Bauteile Betriebslasten ausgesetzt sind.

Erfindungsgemäß ist das Federelement eine Tellerfeder. Eine Tellerfeder ist eine einfache und robuste Form eines Federelements und erfüllt die Spannfunktion optimal.

Insbesondere umfasst der Bolzen eine Mutter, die auf den Bolzen aufgeschraubt ist. Dadurch kann die Spannung in dem Federelement eingestellt werden.

Weiterhin kann wischen einem ersten Bein der Dreibeinklammer und dem ersten Bauteil ein Festlager und zwischen zwei zweiten Beinen der Dreibeinklammer und einem zweiten Bauteil jeweils ein Loslager gebildet sein. Die Kombination von einem Festlager und zwei Loslagem ermöglicht axiale Verschiebungen der beiden Bauteile zu einander bei thermischer Ausdehnung.

Gemäß einer bevorzugten Weiterentwicklung umfassen das Festlager eine Umfangsnut im ersten Bauteil und ein abgewinkeltes, insbesondere balliges Ende des ersten Beins der Dreibeinklammer und die Loslager einen Teil der Umfangsfläche des zweiten Bauteils und jeweils eine abgerundete Auflagefläche der zweiten Beine der Dreibeinklammer. Diese Ausführung des Festlagers und der beiden Loslager ist einfach aufgebaut und leicht herstellbar, wobei aber dennoch die Lagerfunktion zuverlässig erfüllt wird.

Weiterhin wird die Aufgabe durch eine Verwendung der Vorrichtung in einer Gasturbine gelöst, wobei das erste Bauteil das Zwischengehäuse zwischen Hochdruckteil und Niederdruckteil und das zweite Bauteil das Niederdruckgehäuse ist oder das erste Bauteil das Hochdruckgehäuse und das zweite Bauteil das Zwischengehäuse ist. Gerade bei einer Gasturbine ist die Vorrichtung ein wirksames, zuverlässiges und verschleißarmes Mittel zum Positionieren und Verspannen der beiden Bauteile.

Im Folgenden wird ein Ausführungsbeispiel der Erfindung anhand von zwei Figuren näher erläutert. Es zeigen:
- Fig. 1: ein Spannmittel der erfindungsgemäßen Vorrichtung, wobei das Federelement maximal gespannt ist und
- Fig. 2: ein Spannmittel der erfindungsgemäßen Vorrichtung, wobei das Federelement minimal gespannt ist.

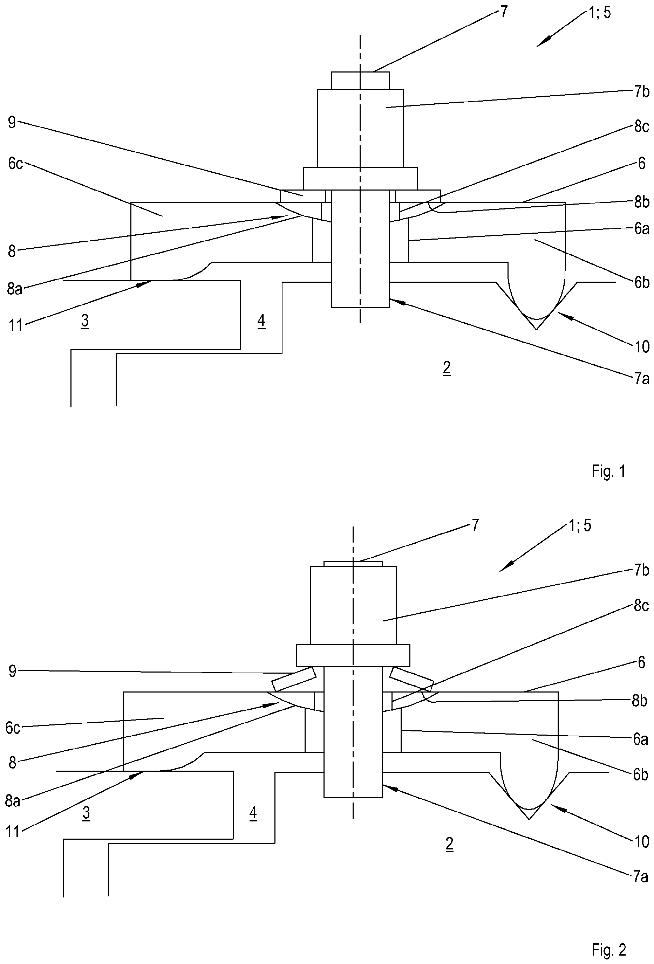

Die Fig. 1 und 2 zeigen jeweils eines von mehreren Spannmitteln 5, die zusammen die Vorrichtung 1 bilden. Das Spannmittel 5 umfasst eine Dreibeinklammer 6, einen Bolzen 7, ein Kugelelement 8 und ein Federelement 9.

Die Vorrichtung 1 positioniert und verspannt ein erstes Bauteil 2, mit einem zweiten Bauteil 3, das das erste Bauteil 2 koaxial überlappt und mit diesem einen Spalt 4 bildet. Die mit einer Bohrung 6a versehene Dreibeinklammer 6 sitzt mit einem ersten Bein 6b auf dem ersten Bauteil 2 und mit zwei in den Fig. 1 und 2 hintereinander liegenden Beinen 6c auf dem zweiten Bauteil 3 auf. Das erste Bauteil 2 umfasst ein nutförmiges Festlager 10 für das erste Bein 6b. Die beiden zweiten Beine 6c liegen auf dem zweiten Bauteil 3 auf, so dass jeweils ein Loslager 11 gebildet wird.

Das mit einer Bohrung 8c versehene Kugelelement 8 liegt mit einer Kugelkappe 8a in einer komplementär geformten Vertiefung der Dreibeinklammer 6 an. Die flache Seite 8b der Kugelkappe zeigt vom ersten Bauteil 2 weg.

Der Bolzen 7 ragt durch die Bohrung 8c im Kugelelement 8 und durch die Bohrung 6a in der Dreibeinklammer 6 hindurch und ist mittels einer Verschraubung 7a an dem ersten Bauteil 2 befestigt. An dem vom ersten Bauteil 2 abgewandten Ende des Bolzens 7 ist eine Mutter 7b auf geschraubt.

Ein Federelement 9, hier als Tellerfeder dargestellt, erzeugt eine Spannung zwischen der Mutter 7b und der Dreibeinklammer 6 mit dem Kugelelement 8, und damit gegenüber den beiden Bauteilen 2 und 3, so dass der Bolzen 7 mit einer Zugkraft belastet wird.

Das Federelement 9 verhindert, dass sich die Mutter 7b und die Verschraubung 7a des Bolzens 7 lockern. Das Federelement 9 kann, z.B. bei einer Gasturbine, eine Belastung zwischen einem Maximalwert von 700 N (Fig. 1) und einem Minimalwert von 100 N (Fig. 2) aufnehmen.

### Bezugszeichenliste

- 1: Vorrichtung
- 2: Erstes Bauteil
- 3: Zweites Bauteil
- 4: Spalt
- 5: Spannmittel
- 6: Dreibeinklammer
- 6a: Bohrung
- 6b: Erstes Bein
- 6c: Zweites Bein
- 7: Bolzen
- 7a: Verschraubung
- 7b: Mutter
- 8: Kugelelement
- 8a: Kugelkappe
- 8b: Flache Seite
- 8c: Bohrung
- 9: Federelement
- 10: Festlager
- 11: Loslager

## Patentansprüche

1. Vorrichtung (1) zum Positionieren und Verspannen von zwei konzentrischen, einander teilweise überlappenden Bauteilen (2, 3), wobei die Vorrichtung (1) mehrere über den Umfang verteilte Spannmittel (5) umfasst, die jeweils eine Dreibeinklammer (6), die einen Spalt (4) zwischen den Bauteilen (2, 3) überspannt, ein Kugelelement (8) und einen Bolzen (7), der die Dreibeinklammer (6) einschließlich des Kugelelements (8) an einem ersten Bauteil (2) befestigt, aufweisen, wobei das Kugelelement (8) ein Kugelabschnitt ist, der mit der Kugelkappe (8a) in einer komplementär zur Kugelkappe (8a) geformten Vertiefung in der vom ersten Bauteil (2) abgewandten Seite der Dreibeinklammer (6) angeordnet ist, und der Bolzen (7) durch jeweils eine Bohrung (6a, 8c) im Kugelabschnitt (8) und in der Dreibeinklammer (6) hindurchgeführt ist, **dadurch gekennzeichnet, dass** der Bolzen(7) mit dem ersten Bauteil (2) verschraubbar ist und ein Federelement (9) in Form einer Tellerfeder zwischen einem Bestandteil des Bolzens (7) und einer flachen Seite (8b) des Kugelelements (8) angeordnet ist .

2. Vorrichtung (1) nach Anspruch 1, **dadurch gekennzeichnet, dass** der Bolzen (7) eine Mutter (7b) umfasst, die auf den Bolzen (7) aufgeschraubt ist.

3. Vorrichtung (1) nach Anspruch 1 oder 2, **dadurch gekennzeichnet, dass** zwischen einem ersten Bein (6b) der Dreibeinklammer (6) und dem ersten Bauteil (2) ein Festlager (10) und zwischen zwei zweiten Beinen (6c) der Dreibeinklammer (6) und einem zweiten Bauteil (3) jeweils ein Loslager (11) gebildet ist.

4. Vorrichtung (1) nach Anspruch 3, **dadurch gekennzeichnet, dass** das Festlager (10) eine Umfangsnut im ersten Bauteil (2) und ein abgewinkeltes, insbesondere balliges Ende des ersten Beins (6b) der Dreibeinklammer (6) und die Loslager (11) einen Teil der Umfangsfläche des zweiten Bauteils (3) und jeweils eine abgerundeten Auflagefläche der zweiten Beine (6c) der Dreibeinklammer (6) umfassen.

5. Verwendung der Vorrichtung (1) nach einem der Ansprüche 1 bis 4 in einer Gasturbine, wobei das erste Bauteil (2) das Zwischengehäuse zwischen Hochdaruckteil und Niederdrücken und das zweite Bauteil (3) das Niederdruckgehäuse oder das erste Bauteil (2) das Hochdruckgehäuse und das zweite Bauteil (3) das Zwischengehäuse ist.

## Claims

1. A device (1) for the positioning and clamping of two concentric elements (2, 3) that partially overlap each other, wherein the device (1) comprises a plurality of clamping means (5), which are distributed over the circumference and which have a respective three-legged clip (6), which spans a slit (4) between the components (2, 3), a spherical element (8) and a pin (7), which secures the three-legged clip (6) including the spherical element (8) to a first component (2), wherein the spherical element (8) has a spherical portion, which is positioned with the spherical cap (8a) in a recess, which is complementarily formed with respect to the spherical cap (8a), in the side of the three-legged clip (6) facing away from the first component (2) and the pin (7) is passed through a respective bore (6a, 8c) in the spherical portion (8) and in the three-legged clip (6), **characterized in that** the pin (7) may be screwed to the first component (2) and a spring element (9) formed by a spring washer is positioned between a component of the pin (7) and a flat side (8b) of the spherical element (8).

2. The device (1) of claim 1, **characterized in that** the pin (7) comprises a nut (7b), which is screwed on the pin (7).

3. The device (1) of claim 1 or claim 2, **characterized in that** a fixed bearing (10) is formed between a first leg (6b) of the three-legged clip (6) and the first component (2) and a respective loose bearing (11) is formed between two second legs (6c) of the three-legged clip (6) and a second component (3).

4. The device (1) of claim 3, **characterized in that** the fixed bearing (10) comprises a peripheral slot in the first component (2) and an angled, in particular convex end of the first leg (6b) of the three-legged clip (6) and the loose bearings (11) comprise a part of the peripheral surface of the second component (3) and a respective rounded bearing surface of the second legs (6c) of the three-legged clip (6).

5. Use of the device (1) of any one of claims 1 to 4 in a gas turbine, wherein the first component (2) is the intermediate housing between the high-pressure part and the low-pressure part and the second component (3) is the low-pressure housing, or wherein the first component (2) is the high-pressure housing and the second component (3) is the intermediate housing.

## Revendications

1. Dispositif (1) de positionnement et de serrage de deux composants concentriques (2, 3) se chevauchant partiellement l'un l'autre, le dispositif (1) comprenant plusieurs moyens de serrage (5) répartis sur la circonférence et comportant chacun une bride à trois branches (6), qui enjambe un espace (4) ménagé entre les composants (2, 3), un élément sphérique (8) et un boulon (7) qui fixe la bride à trois branches (6), y compris l'élément sphérique (8), à un premier composant (2), l'élément sphérique (8) étant une partie sphérique qui est disposée avec la calotte sphérique (8a) dans un évidement, de forme complémentaire à la calotte sphérique (8a), ménagé dans le côté de la bride à trois branches (6) qui est opposé au premier composant (2) et le boulon (7) étant guidé à travers un alésage respectif (6a, 8c) ménagé dans la partie sphérique (8) et dans la bride à trois branches (6), **caractérisé en ce que** le boulon (7) peut être vissé au premier composant (2) et un élément à ressort (9), se présentant sous la forme d'un ressort à disque, est disposé entre une partie du boulon (7) et un côté plat (8b) de l'élément sphérique (8).

2. Dispositif (1) selon la revendication 1, **caractérisé en ce que** le boulon (7) comporte un écrou (7b) qui est vissé sur le boulon (7).

3. Dispositif (1) selon la revendication 1 ou 2, **caractérisé en ce qu'**un palier fixe (10) est formé entre une première branche (6b) de la bride à trois branches (6) et le premier composant (2) et un palier mobile (11) est formé entre deux deuxièmes branches (6c) de la bride à trois branches (6) et un second composant (3).

4. Dispositif (1) selon la revendication 3, **caractérisé en ce que** le palier fixe (10) comporte une rainure circonférentielle ménagée dans le premier composant (2) et une extrémité coudée, en particulier sphérique, de la première branche (6b) de la bride à trois branches (6) et les paliers mobiles (11) comportent une partie de la surface circonférentielle du second composant (3) et une surface d'appui arrondie de chacune des deuxièmes branches (6c) de la bride à trois branches (6).

5. Utilisation du dispositif (1) selon l'une des revendications 1 à 4 dans une turbine à gaz, le premier composant (2) étant le boîtier intermédiaire situé entre la partie haute pression et la partie basse pression et le second composant (3) étant le boîtier basse pression ou bien le premier composant (2) étant le boîtier haute pression et le second composant (3) étant le boîtier intermédiaire.
